# EUROPÄISCHE PATENTANMELDUNG

(11) **EP 2 589 922 A1**
(43) Veröffentlichungstag der Anmeldung: **08.05.2013**
(21) Anmeldenummer: 11187426.9
(22) Anmeldetag: 02.11.2011
(51) Int. Cl.: G01B 7/34

(54) **Verfahren zur Bestimmung der Rauheit einer innenliegenden Schicht**

(71) Anmelder: Siemens Aktiengesellschaft, 80333 München (DE)
(72) Erfinder: Jungbluth, Matthias, 12681 Berlin (DE)

(57) **Zusammenfassung**

Durch die Korrelation einer einmaligen zerstörenden Messung zur Bestimmung der Rauheit und der Leitfähigkeitsmessung eines Übergangsbereichs (10) kann die Rauheit für andere Proben ohne zerstörende Messung bestimmt werden.

## Beschreibung

Die Erfindung betrifft ein Verfahren zur Bestimmung der Rauheit einer innenliegenden Schicht oder eines Substrats.

Rauheiten spielen insbesondere bei gespritzten Schichten eine wichtige Rolle, in dem sie zur Haftung einer überliegenden Schicht beitragen.

Dies ist z.B. die Rauheit einer metallischen Korrosionsschutzschicht, auf der eine keramische Schicht aufgebracht wird.

Ebenso sind Verfahren bekannt, um die Leitfähigkeit von metallischen Schichten zu messen.

Wenn die Rauheit einer Oberfläche nicht mehr frei zugänglich ist, gibt es nur zerstörende Untersuchungsmethoden.

Es ist daher Aufgabe der Erfindung, dieses Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein solches Schichtsystem und die Vorgehensweise,
- Figur 2: eine Messkurve
- Figur 3: eine Turbinenschaufel,
- Figur 4: eine Brennkammer und
- Figur 5: eine Liste von Superlegierungen.

Die Beschreibung und die Figuren stellen nur Ausführungsbeispiele der Erfindung dar.

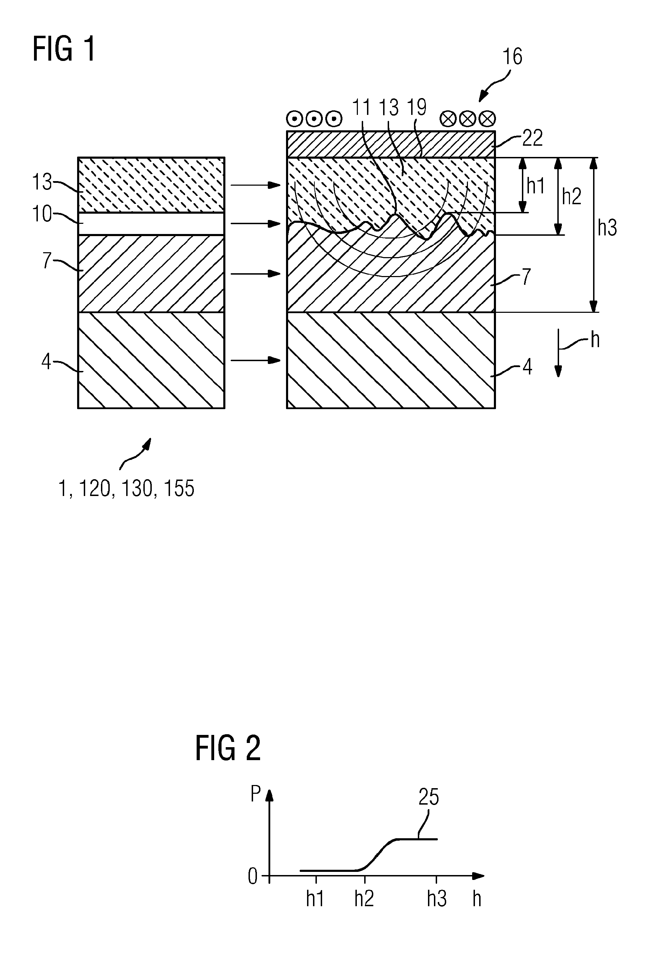

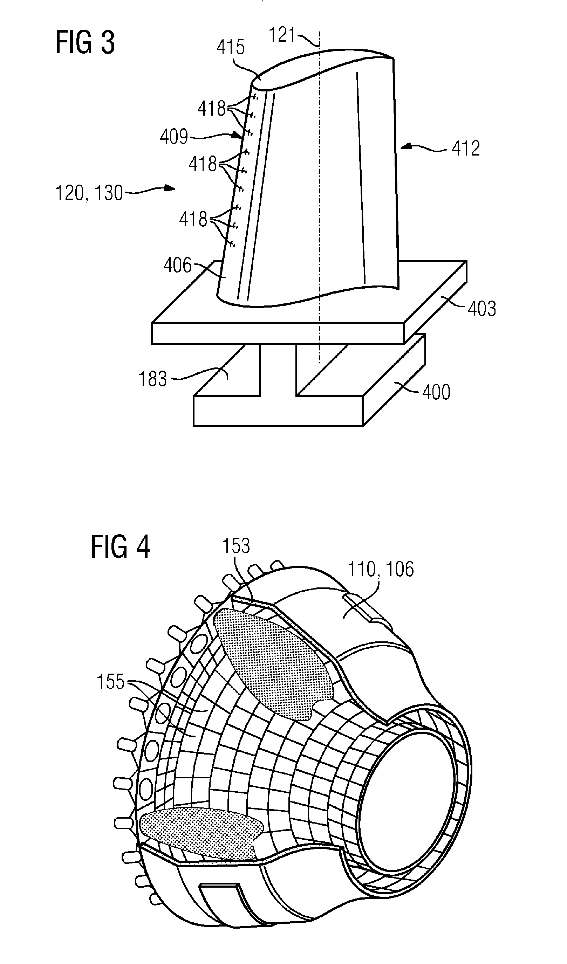

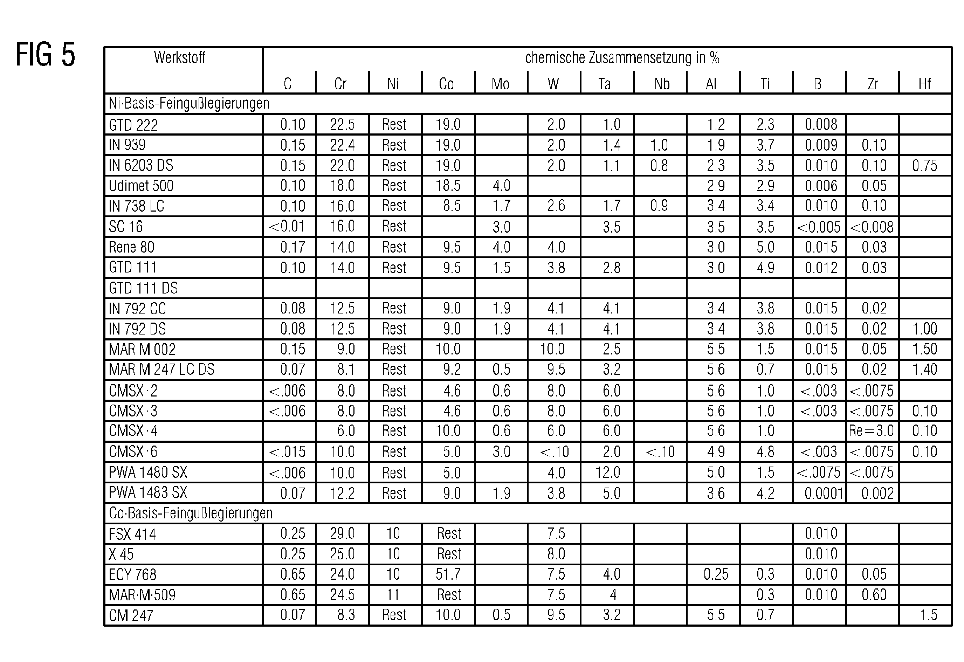

Figur 1 zeigt ein Schichtsystem 1, 120, 130 (Fig. 3), 155 (Fig. 4) als ein Beispiel.
Das Schichtsystem weist ein Substrat 4 auf, das metallisch oder keramisch sein kann, insbesondere bei Turbinenbauteilen 120, 130, 155 ist dies ist eine nickel- oder kobaltbasierte Superlegierung, ganz insbesondere gemäß Figur 5.

Auf dem Substrat 4 ist vorzugsweise eine metallische Schicht 7 aufgebracht. Dies kann eine Aluminidschicht (+Pt, ...) sein oder insbesondere eine MCrAlX-Schicht, wobei X optional ist und insbesondere Yttrium (Y) oder Rhenium (Re) ist.
Die metallische Schicht 7 oder das Substrat 4 weisen eine Oberfläche 11 mit einer Rauheit in einem Schichtbereich 10 auf, die ermittelt werden soll. Diese kann nicht direkt ermittelt werden, da auf der metallischen Schicht 7 oder dem Substrat 4 eine elektrisch nicht leitende Schicht 13, insbesondere eine keramische Schicht 13 vorhanden ist.

Dies ist insbesondere bei Turbinenbauteilen 120, 130, 155 eine keramische Schicht.

Die keramische Schicht 13 weist Zirkonoxid und/oder eine Pyrochlorstruktur auf. Sie ist einlagig oder zweilagig ausgeführt.

Es sind Verfahren bekannt, insbesondere Wirbelstromverfahren, bei denen mittels elektrischer Erregung 16 die elektrische Leitfähigkeit als Parameter P (hier nur beispielhaft zur Erläuterung des Verfahrens verwendet) eines hochleitfähigen Bereiches 7, 4 gemessen werden kann.

Die Eindringtiefen solcher Ströme kann variiert werden und wird auch benutzt zur Schichtdickenmessung einer solchen innenliegenden Schicht 7.

Im Abstand h zu der äußersten Oberfläche 19, die einen gewissen Lift-off 22 messtechnisch bedingt, aufweist, gibt es bis zu einer Tiefe h1 keine messbare oder geringe elektrische Leitfähigkeit.

In dem Schichtbereich bis zur Tiefe h2 gibt es den Schichtbereich 10 aus metallischem und keramischem Material, da die Oberfläche 11 der Schicht 7 rau ist. Somit ist in dem Übergangsbereich 10 metallisches und keramisches Material, das deutlich weniger elektrisch leitfähig ist, vorhanden.

Ab einer Schichttiefe h2 und wird nur noch ein metallisches Material, hier der Beschichtung 7, gemessen (da schichtweise innerhalb der Schichten 13, 10, 7 gemessen wird)..
Durch entsprechende Messparameter kann die Genauigkeit der Eindringtiefe so vorangetrieben werden, dass sie deutlich kleiner als (h2 - h1) ist, insbesondere mindestens ≤ 0,2* (h2 -h1), wobei (h2 - h1) die Dicke des Übergangsbereichs 10 ist. Diese Leitfähigkeit kann bestimmt werden. Der Verlauf für diesen Wert, allgemein P, ist in Figur 2 dargestellt.

In einem vorzugsweise einmaligen vergleichenden Schritt, wird die Leitfähigkeit oder der Parameter P durch eine zerstörende Bestimmung mit der Rauheit des Schichtbereichs 10 korreliert.

Es wird also die Leitfähigkeit in dem Übergangsbereich 10 gemessen und dann zerstörend die Rauheit bestimmt.
Für die Rauheit können verschieden Rauhigkeitswerte zugrunde gelegt werden.

Somit kann der Anstieg der Leitfähigkeit P (Fig. 2), ausgehend von der nichtleitfähigen Schicht, korreliert werden mit der Rauheit und an anderen Stellen oder anderen Bauteilen kann durch dieselbe Leitfähigkeitsmessung eine Korrelation zwischen der zu ermittelnden Rauheit und dem bekannten, gemessenen Wert P bzw. der Kurve P(h) hergestellt werden. Weitere Parameter P, wie thermische Leitfähigkeit können verwendet werden.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zur Bestimmung der Rauheit einer innenliegenden Oberfläche (11) eines metallisches Substrats (4) oder einer metallischen Schicht (7)
unter einer elektrisch nichtleitenden Schicht (13),
bei dem
durch die elektrisch nichtleitende Schicht (13), insbesondere einer keramischen Schicht (13),
zumindest ein Materialparameter (P) schichtweise zumindest in einem Übergangsbereich (10) von äußerer elektrisch nichtleitender Schicht (13) und
innenliegenden Substrat (4) oder Schicht (7) gemessen wird, bis dieser ansteigt und einen maximalen Plateauwert (25) erreicht,
wobei der Materialparameter (P) in dem Übergangsbereich (10) korreliert wird mit der Rauheit von Vergleichsproben, wobei die Rauheit vorab ermittelt wurde,
insbesondere durch Schliffbilder.

2. Verfahren nach Anspruch 1,
bei dem die elektrische Leitfähigkeit als Materialparameter (P) bestimmt wird.

3. Verfahren nach einem oder beiden der Ansprüche 1 oder 2, bei dem die thermische Leitfähigkeit als Materialparameter (P) bestimmt wird.

4. Verfahren nach einem oder mehreren der Ansprüche 1, 2 oder 3,
bei dem ein Schichtsystem aus Substrat (4), metallischer Schicht (7) und äußerster keramischer Schicht (13) vermessen wird.

## Geänderte Patentansprüche

### Geänderte Patentansprüche gemäss Regel 137(2) EPÜ.

**1.** Verfahren zur Bestimmung der Rauheit einer innenliegenden Oberfläche (11) eines metallisches Substrats (4) oder einer metallischen Schicht (7)
unter einer elektrisch nichtleitenden Schicht (13),
bei dem
durch die elektrisch nichtleitende Schicht (13),
insbesondere einer keramischen Schicht (13),
zumindest ein Materialparameter (P) schichtweise zumindest in einem Übergangsbereich (10) von äußerer elektrisch nichtleitender Schicht (13) und
innenliegenden Substrat (4) oder Schicht (7) gemessen wird, bis dieser ansteigt und einen maximalen Plateauwert (25) erreicht,
wobei der Materialparameter (P) in dem Übergangsbereich (10) korreliert wird mit der Rauheit von Vergleichsproben, wobei die Rauheit vorab durch Schliffbilder ermittelt wurde.

**2.** Verfahren nach Anspruch 1,
bei dem die elektrische Leitfähigkeit als Materialparameter (P) bestimmt wird.

**3.** Verfahren nach einem oder beiden der Ansprüche 1 oder 2,
bei dem die thermische Leitfähigkeit als Materialparameter (P) bestimmt wird.

**4.** Verfahren nach einem oder mehreren der Ansprüche 1, 2 oder 3,
bei dem ein Schichtsystem aus Substrat (4), metallischer Schicht (7) und äußerster keramischer Schicht (13) vermessen wird.
